# EUROPÄISCHE PATENTSCHRIFT

(11) **EP 4 248 150 B1**
(45) Veröffentlichungstag und Bekanntmachung des Hinweises auf die Patenterteilung: **21.05.2025**
(21) Anmeldenummer: 21811270.4
(22) Anmeldetag: 10.11.2021
(51) Int. Cl.: B60H 1/00, B60H 1/32, F25B 5/02, F25B 13/00, F25B 25/00, F25B 40/00, F25B 41/20

(54) **KÄLTEANLAGE MIT WÄRMEPUMPENFUNKTION FÜR EIN KRAFTFAHRZEUG MIT EINER EINZIGEN NIEDERDRUCKSEITIGEN SENSOREINRICHTUNG**
REFRIGERATION SYSTEM HAVING A HEAT PUMP FUNCTION FOR A MOTOR VEHICLE, HAVING A SINGLE SENSOR DEVICE ON THE LOW-PRESSURE SIDE
INSTALLATION FRIGORIFIQUE À FONCTION DE POMPE À CHALEUR POUR VÉHICULE AUTOMOBILE DOTÉE D'UN SEUL DISPOSITIF DE DÉTECTION CÔTÉ BASSE PRESSION

(30) Priorität: 23.11.2020 DE 102020130912
(43) Veröffentlichungstag der Anmeldung: 27.09.2023
(73) Patentinhaber: AUDI AG, 85057 Ingolstadt (DE)
(72) Erfinder: HAMMER, Hans, 85276 Pfaffenhofen (DE); REBINGER, Christian, 80807 München (DE); SCHROEDER, Dirk, 85077 Manching (DE)
(86) Internationale Anmeldenummer: PCT/EP2021/081189
(87) Internationale Veröffentlichungsnummer: WO 2022/106272

(56) Entgegenhaltungen:
- DE-A1- 102015 007 564
- DE-A1- 102017 218 424
- DE-A1- 102018 209 769
- DE-A1- 102018 213 232
- US-B2- 9 517 680

## Beschreibung

Die Erfindung betrifft eine Kälteanlage gemäß dem Oberbegriff von Anspruch 1, insbesondere mit Wärmepumpenfunktion, für ein Kraftfahrzeug, wobei die Kälteanlage umfasst: einen Kältemittelverdichter, der mit einem Primärstrang verbindbar oder verbunden ist; einen direkt oder indirekt wirkenden äußeren Wärmeübertrager, der im Primärstrang angeordnet ist; einen ersten Verdampfer, der im Primärstrang angeordnet ist; einen ersten direkt oder indirekt wirkenden Wärmeübertrager, insbesondere Chiller, der strömungstechnisch parallel zu dem Verdampfer angeordnet ist; und einen niederdruckseitig angeordneten Kältemittelsammler.

Eine derartige Kälteanlage ist beispielsweise aus der DE 10 2017 218 424 A1 bekannt.

Kälteanlagen mit einem niederdruckseitigen Kältemittelsammler, die sowohl direkt Abwärme aus elektrischen (Antriebs-)Komponenten über den weiteren Wärmeübertrager, insbesondere Chiller, als auch Umgebungswärme über einen äußeren Wärmeübertrager nutzen, sind gemäß der DE 10 2018 201 165 B3 an verschiedenen Stellen im Kältemittelkreislauf mit Druck-/ Temperatursensoren versehen. Insbesondere sind auf der Niederdruckseite der Kälteanlage regelmäßig zwei oder mehr Sensoreinrichtungen für die Erfassung von Druck oder/und Temperatur vorgesehen. Weitere Kälteanlagen sind aus der DE 10 2015 007 564 A1, der nachveröffentlichten DE 10 2019 135 056, der DE 10 2018 201 945 A1 und der DE 10 2018 213 232 A1 bekannt. Dabei sind insbesondere auf der Niederdruckseite jeweils ein Druck-/Temperatursensor nach dem Verdampfer oder nach dem weiteren Wärmeübertrager (Chiller) sowie nach dem Kältemittelsammler angeordnet.

Die der Erfindung zu Grunde liegende Aufgabe wird darin gesehen, eine Kälteanlage anzugeben, bei der ein vereinfachter Aufbau bei im Wesentlichen gleicher Funktionalität erreicht wird.

Diese Aufgabe wird gelöst durch eine Kälteanlage mit den Merkmalen des Patentanspruchs 1 und durch ein Kraftfahrzeug mit den Merkmalen des Patentanspruchs 9.

Vorteilhafte Ausgestaltungen mit zweckmäßigen Weiterbildungen sind in den abhängigen Patentansprüchen angegeben.

Vorgeschlagen wird also eine Kälteanlage, insbesondere mit einer optionalen Wärmepumpenfunktion, für ein Kraftfahrzeug, wobei die Kälteanlage umfasst: einen Kältemittelverdichter, der mit einem Primärstrang verbindbar oder verbunden ist; einen direkt oder indirekt wirkenden äußeren Wärmeübertrager, der im Primärstrang angeordnet ist; einen ersten Verdampfer, der im Primärstrang angeordnet ist; einen ersten direkt oder indirekt wirkenden Wärmeübertrager, insbesondere Chiller, der strömungstechnisch parallel zu dem Verdampfer angeordnet ist; und einen niederdruckseitig angeordneten Kältemittelsammler, wobei stromabwärts von dem Verdampfer und dem weiteren Wärmeübertrager, insbesondere Chiller, eine einzige Sensoreinrichtung angeordnet ist, die dazu eingerichtet ist, den Druck und die Temperatur des Kältemittels auf der Niederdruckseite der Kälteanlage zu erfassen.

Durch die Anordnung einer einzigen Sensoreinrichtung für die Erfassung von Druck und Temperatur kann, verglichen mit den bekannten Kälteanlagen, auf eine Sensoreinrichtung verzichtet werden, was den Aufbau der Kälteanlage vereinfacht. Es wird darauf hingewiesen, dass die einzige Sensoreinrichtung einen einzelnen Drucksensor und einen einzelnen Temperatursensor aufweisen kann oder als kombinierter Druck-/Temperatursensor ausgeführt sein kann.

Bei der Kälteanlage ist die einzige Sensoreinrichtung stromaufwärts von dem Kältemittelsammler angeordnet. Mit anderen Worten ist die einzige Sensoreinrichtung vor dem Kältemittelsammler angeordnet, insbesondere kurz bzw. unmittelbar vor dem Kältemittelsammler. Dabei kann unter unmittelbar vor dem Kältemittelsammler ein Abstand verstanden werden, der bis etwa 20 Zentimeter stromaufwärts von dem Kältemittelsammler reicht.

Die einzige Sensoreinrichtung kann stromabwärts von einem Abzweig angeordnet sein, bei dem ein ausgangsseitiger Leitungsabschnitt des Verdampfers und ein ausgangsseitiger Leitungsabschnitt des weiteren Wärmeübertragers, insbesondere Chillers, miteinander verbunden sind. Mit anderen Worten ist die einzige Sensoreinrichtung nach einer Vereinigung der Kältemittelstränge von Verdampfer und Chiller angeordnet.

Die Kälteanlage kann eine Steuereinrichtung aufweisen, die dazu eingerichtet ist, basierend auf erfassten Druck- oder/und Temperaturwerten von der einzigen Sensoreinrichtung wenigstens eine der folgenden Funktionen auszuführen: Überwachung einer temporären, insbesondere kurzzeitig oder langzeitig auftretenden, Überhitzung des Kältemittels zur Unterfüllungserkennung; Überwachung des minimalen Saugdrucks zum Vereisungsschutz. Dabei ist eine kurzzeitige Überhitzung mit einhergehender Unterfüllung, die in der Regel nur wenige Sekunden dauert, in der Regel unkritisch für den Betrieb der Kälteanlage, wohingegen eine langzeitige Überhitzung mit einhergehenden Unterfüllung von mindestens einer bis mehreren Minuten, nachteilig und kritisch für den Kälteanlagenbetrieb ist.

Bei der Überwachung und gegebenenfalls zeitnahen Kompensation bzw. dem Abklingen der temporären Unterfüllung kann insbesondere ein Überhitzungszustand berücksichtigt werden. Ein solche Überhitzungszustand kann beispielsweise auftreten bei
Lastwechseln im System hin zu einem höheren Leistungsbedarf;
Niederlast, wenn der Verdampfer alleine im Kühlbetrieb (AC-Betrieb) betrieben wird;
einem Wärmepumpenbetrieb oder bei
einem Nachheizbetrieb (Reheat) mit Wärmeüberschuss.

Dabei ist bei der Anordnung der einzigen Sensoreinrichtung stromabwärts von dem Kältemittelsammler, aufgrund des Übergangs eines stationären in einen zumindest temporär dynamischen (instationären) Betrieb der Kälteanlage im Zusammenhang mit dem aufgetretenen Lastwechsel und der noch nicht vollständig erfolgten Freisetzung von zusätzlich erforderlichem Kältemittel aus dem Kältemittelsammler in den Kreislauf, eine Verzögerung hinsichtlich des Abbaus des Überhitzungszustandes bei regulärem Anlagenbetrieb zu berücksichtigen. Der Bereitstellungsprozess von Kältemittel aus dem Sammler in das aktive System bzw. den Kreislauf selbst läuft dabei zeitlich verzögert ab. Je größer der Lastwechsel desto ausgeprägter bzw. länger ist die Zeitspanne bis zur Wiederherstellung des regulären, quasi stationären Betriebs mit einem im Wesentlichen konstanten Kältemittelmassenstrom.

Bei der Kälteanlage mit der einzigen niederdruckseitigen Sensoreinrichtung stromaufwärts von dem Kältemittelsammler kann die Steuereinrichtung weiter dazu eingerichtet sein, basierend auf erfassten Druck- oder/und Temperaturwerten wenigstens eine der folgenden weiteren Funktionen auszuführen:
Regelung des Verdampfers oder/und des weiteren Wärmeübertragers, insbesondere Chillers, in einem AC-Dualbetrieb;
Regelung der Überhitzung des Verdampfers, wenn mehr Kühlleistung am weiteren Wärmeübertrager, insbesondere Chiller, gefordert ist;
Regelung der Überhitzung des weiteren Wärmeübertragers, insbesondere Chillers, wenn mehr Kühlleistung am Verdampfer gefordert ist.

Wird die einzige Sensoreinrichtung stromaufwärts von dem Kältemittelsammler angeordnet, können die oben beschriebenen Funktionen in Bezug auf die Überhitzung ohne nennenswerte Verzögerung umgesetzt werden. Entsprechend kann die Überwachung und gegebenenfalls Abregelung temporärer Unterfüllung über den Überhitzungszustand sehr schnell und genau erfolgen.

Bei der Kälteanlage mit der einzigen niederdruckseitigen Sensoreinrichtung stromaufwärts von dem Kältemittelsammler kann die Steuereinrichtung dazu eingerichtet sein, wenigstens eine gespeicherte Kennlinie oder/und wenigstens ein gespeichertes Kennfeld zu berücksichtigen, wobei die Kennlinie bzw. das Kennfeld Werte umfassen für das Bestimmen vorherrschender Drucklagen, insbesondere einer Saugdruckabregelung, basierend auf einem von der einzigen Sensoreinrichtung erfassten Druck und auf einem in der Kennlinie bzw. im Kennfeld enthaltenen Druckverlust, der stromabwärts von der einzigen Sensoreinrichtung bis zum Kältemittelverdichter auftritt. Die Kennlinie bzw. das Kennfeld dienen dabei insbesondere der Erzielung einer verbesserten Güte hinsichtlich der Bestimmung oder Abschätzung von Zielgrößen, die systemseitig eingestellt werden. Dabei wird angestrebt, dass in allen Betriebspunkten der Kälteanlage die jeweils erforderlichen bzw. aktuellen Drücke bestimmt werden und bedarfsweise eine Niederdruckgrenze abzuschätzen bzw. zu prognostizieren.

Weiter kann bei der Kälteanlage die Steuereinrichtung dazu eingerichtet sein, eine Unterfüllung, insbesondere mittels des ausgewerteten Kältemittelzustands, stromabwärts von dem Kältemittelsammler zu erkennen, wobei eine verzögernde Wirkung des Kältemittelsammlers mittels eines Kennfeldes oder/und mittels Funktionen abgeschätzt oder ermittelt wird. Dabei ist zu berücksichtigen, dass eine Unterfüllungserkennung mit der stromaufwärts von dem Kältemittelsammler angeordneten Sensoreinrichtung direkter und damit dynamischer und möglicherweise sensibler erfasst wird, so dass die beschriebene Dämpfung bzw. verzögernde Wirkung durch den Kältemittelsammler zur Einstellung eines finalen Kältemittelzustandes in der Kälteanlage mittels Kennfeld oder/und Funktionen modelliert werden sollte. In einer vereinfachteren Variante kann alternativ auf eine Kennlinie zurückgegriffen werden.

Die Kälteanlage kann ferner umfassen: Einen Sekundärstrang, der mit dem Kältemittelverdichter verbunden oder verbindbar ist; und einen weiteren, eine Wärmequelle darstellenden, direkt oder indirekt wirkenden Wärmeübertrager, insbesondere ein Heizregister, der im Sekundärstrang angeordnet ist.

Die Kälteanlage kann weiter umfassen: Ein zwischen dem Kältemittelverdichter und dem äußeren Wärmeübertrager angeordnetes Primärstrangventil; und ein zwischen dem Kältemittelverdichter und dem weiteren, eine Wärmequelle darstellenden Wärmeübertrager, insbesondere Heizregister, angeordnetes Sekundärstrangventil.

Ein Kraftfahrzeug, insbesondere ein zumindest teilweise elektrisch betriebenes Kraftfahrzeug, kann eine oben beschriebene Kälteanlage aufweisen. Bei einem Elektrofahrzeug kann der effiziente Betrieb der Kälteanlage zu Stromeinsparungen führen, so dass hierdurch eine größere Reichweite des Elektrofahrzeugs erzielt werden kann. Insbesondere können durch die hier vorgestellte Kälteanlage auch mit nur einer einzigen niederdruckseitigen Sensoreinrichtung für die Erfassung von Druck und Temperatur weitgehend alle Betriebszustände der Kälteanlage überwacht werden, wie wenn die Kälteanlage zumindest zwei niederdruckseitige Druck-/Temperatursensoren aufweisen würde.

Weitere Vorteile und Einzelheiten der Erfindung ergeben sich aus der nachfolgenden Beschreibung von Ausführungsformen unter Bezugnahme auf die Figuren. Dabei zeigt:
- Fig. 1: ein schematisches und vereinfachtes Schaltbild einer Kälteanlage für ein Kraftfahrzeug, das außerhalb des Schutzumfangs des Anspruchs fällt;

- Fig. 2: ein schematisches und vereinfachtes Schaltbild einer Kälteanlage für ein Kraftfahrzeug.

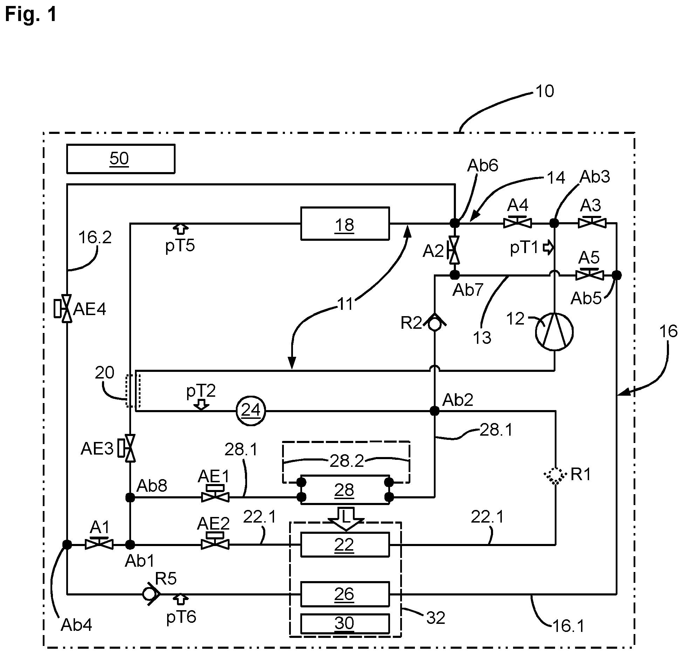

In Fig. 1 ist eine Ausführungsform einer Kälteanlage 10 für ein Kraftfahrzeug schematisch und vereinfacht dargestellt, die nicht Teil der Erfindung ist. Die Kälteanlage 10 umfasst einen Kältemittelkreislauf 11, der sowohl in einem Kälteanlagenbetrieb (kurz auch AC-Betrieb genannt), als auch in einem Wärmepumpenmodus betrieben werden kann. Die Kälteanlage 10 umfasst in der gezeigten Ausführungsform einen Kältemittelverdichter 12, einen äußeren Wärmeübertrager 18, einen inneren Wärmeübertrager 20, einen Verdampfer 22 und einen Akkumulator bzw. Kältemittelsammler 24. Der äußere Wärmeübertrager 18 kann als Kondensator oder Gaskühler ausgebildet sein. Insbesondere ist der äußere Wärmeübertrager 18 in der dargestellten Ausführungsform bidirektional durchströmbar.

Der Verdampfer 22 ist hier beispielhaft als Frontverdampfer für ein Fahrzeug gezeigt. Der Verdampfer 22 steht stellvertretend auch für weitere in einem Fahrzeug mögliche Verdampfer, wie beispielsweise Fondverdampfer, die strömungstechnisch parallel zueinander angeordnet sein können. Mit anderen Worten umfasst die Kälteanlage 10 also wenigstens einen Verdampfer 22.

Stromabwärts des Verdichters 12 ist ein Absperrventil A4 angeordnet. Stromaufwärts des Verdampfers 22 ist ein Expansionsventil AE2 vorgesehen.

Im Rahmen dieser Beschreibung wird in dem gesamten Kältemittelkreislauf 11 der Kälteanlage 10 der Abschnitt vom Verdichter 12 zum äußeren Wärmeübertrager 18, zum inneren Wärmeübertrager 20 und zum Verdampfer 22 als Primärstrang 14 bezeichnet.

Die Kälteanlage 10 umfasst weiter ein Heizregister 26 (auch als Heizkondensator oder Heizgaskühler bezeichnet). Stromaufwärts des Heizregisters 26 ist ein Absperrventil A3 angeordnet. Stromabwärts des Heizregisters 26 ist ein Absperrventil A1 angeordnet. Ferner ist stromabwärts des Heizregisters 26 ein Expansionsventil AE4 angeordnet.

Im Rahmen dieser Beschreibung wird in dem gesamten Kältemittelkreislauf der Kälteanlage 10 der Abschnitt vom Verdichter 12 zum Heizregister 26, zum Expansionsventil AE4 und zu einem Abzweig Ab2 als Sekundärstrang 16 bezeichnet. Der Sekundärstrang 16 umfasst einen Heizzweig 16.1, der sich von dem Absperrventil A3 über das Heizregister 26 zum Absperrventil A1 erstreckt. Weiter umfasst der Sekundärstrang 16 einen Nachheizzweig bzw. Reheat-Zweig 16.2, der stromaufwärts mit dem Heizregister 26 und stromabwärts mit dem äußeren Wärmeübertrager 18 fluidverbindbar ist. Dabei mündet der Sekundärstrang 16 bzw. der Reheat-Zweig 16.2 bei einem Abzweigpunkt Ab2 in den Primärstrang 14.

Die Kälteanlage 10 umfasst einen weiteren Verdampfer bzw. Chiller 28. Der Chiller 28 ist strömungstechnisch parallel zum Verdampfer 22 vorgesehen. Der Chiller 28 kann beispielsweise zur Kühlung einer elektrischen Komponente des Fahrzeugs dienen, aber auch zur Realisierung einer Wasser-Wärmepumpenfunktion unter Nutzung der Abwärme von wenigstens einer elektrischen Komponente. Dem Chiller 28 ist stromaufwärts ein Expansionsventil AE1 vorgeschaltet.

Die Kälteanlage 10 kann auch ein elektrisches Heizelement 30 aufweisen, das beispielsweise als Hochvolt-PTC-Heizelement ausgeführt ist. Das elektrische Heizelement 30 dient als Zusatzheizer für einen in den Fahrzeuginnenraum geführten Zuluftstrom L. Dabei kann das elektrische Heizelement 30 zusammen mit dem Heizregister 26 und dem Verdampfer 22 in einem Klimagerät 32 untergebracht sein. Dabei kann das elektrische Heizelement 30 dem Heizregister 26 nachgeschaltet angeordnet sein.

In der Fig. 1 sind ferner noch Rückschlagventile R1 und R2 ersichtlich. Ferner sind auch einige hochdruckseitige Sensoren pT1, pT5, pT6 zur Erfassung von Druck oder/und Temperatur des Kältemittels dargestellt. Es wird darauf hingewiesen, dass die Anzahl der hochdruckseitigen Sensoren bzw. deren Anordnung hier nur beispielhaft gezeigt ist. Im gezeigten Beispiel sind als Sensoren kombinierte Druck-/Temperatursensoren pT1, pT5 und pT6 gezeigt. Es ist aber genauso denkbar, dass voneinander getrennte Sensoren für die Messung von Druck bzw. Temperatur eingesetzt werden und ggf. auch räumlich voneinander getrennt entlang den Kältemittelleitungen angeordnet sind.

Die Kälteanlage 10 kann in unterschiedlichen Modi betrieben werden, die nachfolgend kurz beschrieben werden.

Im AC-Betrieb des Kältemittelkreislaufs 11 strömt das auf Hochdruck verdichtete Kältemittel ausgehend von dem Kältemittelverdichter 12 bei offenem Absperrventil A4 in den äußeren Wärmeübertrager 18. Von dort strömt es zu dem Hochdruckabschnitt des inneren Wärmeübertragers 20 und dem vollständig geöffneten Expansionsventil AE3. Über einen Abzweigpunkt Ab1 kann das Kältemittel zum Expansionsventil AE2 und in den Innenraum-Verdampfer 22 strömen (Verdampferabschnitt 22.1). Parallel oder alternativ kann das Kältemittel über einen Abzweigpunkt Ab4 und das Expansionsventil AE1 in den Chiller 28 strömen (Chillerabschnitt 28.1). Aus dem Verdampfer 22 oder/und dem Chiller 28 strömt das Kältemittel niederdruckseitig in den Sammler 24 und durch den Niederdruckabschnitt des inneren Wärmeübertragers 20 zurück zum Verdichter 12.

In dem AC-Betrieb ist der Heizzweig 16.1 bzw. der Sekundärstrang 16 mittels des Absperrventils A3 abgesperrt, so dass heißes Kältemittel nicht durch das Heizregister 26 strömen kann. Zur Rückholung von Kältemittel aus dem inaktiven Heizzweig 16.1 kann das als Absperrventil ausgebildete Absperrorgan A5 geöffnet werden, so dass das Kältemittel über das Absperrorgan A5 und das Rückschlagventil R2, bei gleichzeitig geschlossenem Absperrorgan A2, in Richtung des Sammlers 24 strömen kann.

Im Heizbetrieb des Kältemittelkreislaufs 11 wird das Absperrventil A4 geschlossen und das Absperrventil A3 geöffnet, so dass heißes Kältemittel in den Heizzweig 16.1 strömen kann.

Zur Durchführung der Heizfunktion mittels des Chillers 28 zur Realisierung eines Wasser-Wärmepumpenbetriebs strömt das mittels des Kältemittelverdichters 12 verdichtete Kältemittel über das geöffnete Absperrventil A3 in das Heizregister 26. Am Heizregister 26 wird Wärme an einen in den Fahrzeuginnenraum geführten Zuluftstrom L abgegeben. Das Kältemittel strömt anschließend über das geöffnete Absperrventil A1 und den Abzweigpunkt Ab1. Es wird mittels des Expansionsventils AE1 in den Chiller 28 zur Aufnahme von Abwärme der in einem Kühlmittelkreislauf 28.2 angeordneten elektrischen und/oder elektronischen Komponenten entspannt. Bei dieser Heizfunktion sind die Expansionsventile AE3 und AE4 geschlossen, das Absperrventil A5 geschlossen und das Absperrventil A2 geöffnet. Dabei kann über das Absperrventil A2 im Wasser-Wärmepumpenbetrieb ausgelagertes Kältemittel aus einem Bidirektionalzweig 14.1 bzw. dem Primärstrang 14 abgesaugt und über das Rückschlagventil R2 dem Sammler 24 zugeführt werden.

Zur Durchführung der Heizfunktion mittels des äußeren Wärmeübertragers 18 als Wärmepumpenverdampfer strömt das mittels des Kältemittelverdichters 12 verdichtete Kältemittel über das geöffnete Absperrventil A3 zur Abgabe von Wärme an einen Zuluftstrom L in das Heizregister 26. Anschließend wird es über das geöffnete Absperrventil A1 mittels des Expansionsventils AE3 in den äußeren Wärmeübertrager 18 zur Aufnahme von Wärme aus der Umgebungsluft entspannt. Danach strömt das Kältemittel über einen Wärmepumpenrückführzweig 15 zum Sammler 24 und zurück zum Kältemittelverdichter 12. Die Expansionsventile AE1, AE2 und AE4 bleiben dabei, ebenso wie das Absperrventil A5, geschlossen.

Eine indirekte Dreiecksschaltung kann dadurch realisiert werden, dass bei geöffnetem Absperrventil A1 das von dem Kältemittelverdichter 12 verdichtete Kältemittel mittels des Expansionsventils AE1 in den Chiller 28 entspannt wird, wobei gleichzeitig kühlmittelseitig, also in dem Kühlmittelkreislauf 28.2 kein Massenstrom erzeugt wird, also bspw. das als Kühlmittel verwendete Fluid, wie etwa Wasser oder Wasser-Glykol-Gemisch, auf der Kühlmittelseite des Chillers 28 stehen bleibt bzw. der Chiller 28 nicht aktiv von Kühlmittel durchströmt wird. Die Expansionsventile AE2, AE3 und AE4 bleiben bei dieser Schaltvariante geschlossen.

Bei einem Nachheiz- bzw.- Reheat-Betrieb wird der in den Fahrzeuginnenraum zugeführte Zuluftstrom L mittels des Verdampfers 22 zunächst gekühlt und damit entfeuchtet. Mit der auf das Kältemittel durch Verdampfung und Entfeuchtung übertragenen Wärme sowie der dem Kältemittel über den Verdichter 12 zugeführten Wärme kann der Zuluftstrom L mittels des Heizregisters 26 vollständig oder zumindest teilweise wieder erwärmt werden.

Hierzu weist die Kälteanlage 10, insbesondere das Klimagerät 32, zwischen dem Verdampfer 22 und dem Heizregister 26 einstellbare, insbesondere steuerbare und schwenkbare, Temperaturklappen 34 auf. Im dargestellten Beispiel sind eine linke und eine rechte Temperaturklappe 34L und 34R (in Figur 1 schematisch dargestellt) angeordnet. Die Temperaturklappen 34L, 34R können zwischen einer Offenposition, die als 100%-Position bezeichnet wird, und einer Schließposition, die als 0%-Position bezeichnet wird, eingestellt bzw. verschwenkt werden. Alternativ ist es auch möglich, die Temperaturklappen 34R, 34L dem Heizregister 26 nachzuschalten.

In der 100%-Position wird der gesamte den Verdampfer 22 durchströmende Zuluftstrom L über das Heizregister 26 geführt und erwärmt, bevor dieser in den Fahrgastraum des Fahrzeugs strömen kann. In der 0%-Position strömt der gesamte den Verdampfer 22 durchströmende Zuluftstrom L im Bypass um das Heizregister 26 ohne Erwärmung und damit ohne Wärmeaufnahme in den Fahrgastraum.

In einer x-Position der Temperaturklappen 34L und 34R mit 0 % < x < 100 % sind diese Temperaturklappen nur teilweise geöffnet, so dass jeweils nur ein Teilluftstrom des den Verdampfer 22 durchströmenden Zuluftstroms L über das Heizregister 26 geführt wird. Dieser erwärmte Teilluftstrom kann anschließend dem verbleibenden, gekühlten und entfeuchteten Teilluftstrom beigemischt werden. Der in dieser Weise erwärmte Zuluftstrom L wird dem Fahrgastraum des Fahrzeugs zugeführt. Beispielhaft zeigt eine 50 %-Position an, dass die Temperaturklappen 34R und 34L nur halb, also 50 % geöffnet sind.

Auf der Niederdruckseite der Kälteanlage 10, insbesondere stromabwärts von dem Verdampfer 22 und stromabwärts von dem Chiller 28, ist eine einzige Sensoreinrichtung pT2 angeordnet. Im Beispiel der Fig. 1 ist die Sensoreinrichtung pT2 stromabwärts von dem Kältemittelsammler 24 angeordnet. Insbesondere ist die Sensoreinrichtung pT2 zwischen dem Kältemittelsammler 24 und dem inneren Wärmeübertrager 20 vorgesehen.

Der Verdampfer 22 und der Chiller 28 haben einen jeweiligen ausgangsseitigen bzw. stromabwärts angeordneten Abschnitt des betreffenden Verdampferabschnitts 22.1 bzw. Chillerabschnitts 28.1, die bei dem Abzweig Ab2 miteinander verbunden sind. Die einzige Sensoreinrichtung pT2 auf der Niederdruckseite ist stromabwärts von dem Abzweig Ab2 vorgesehen. Hierdurch ist sichergestellt, dass unabhängig davon, ob der Verdampfer 22 oder der Chiller 28 alleine bzw. kombiniert von Kältemittel durchströmt werden, der Druck und die Temperatur des Kältemittels niederdruckseitig erfasst werden können. Mit anderen Worten ist die einzige Sensoreinrichtung pT2 zwischen dem Abzweig Ab2 und dem inneren Wärmeübertrager 20 (sofern vorhanden) bzw. dem Kältemittelverdichter 12 angeordnet.

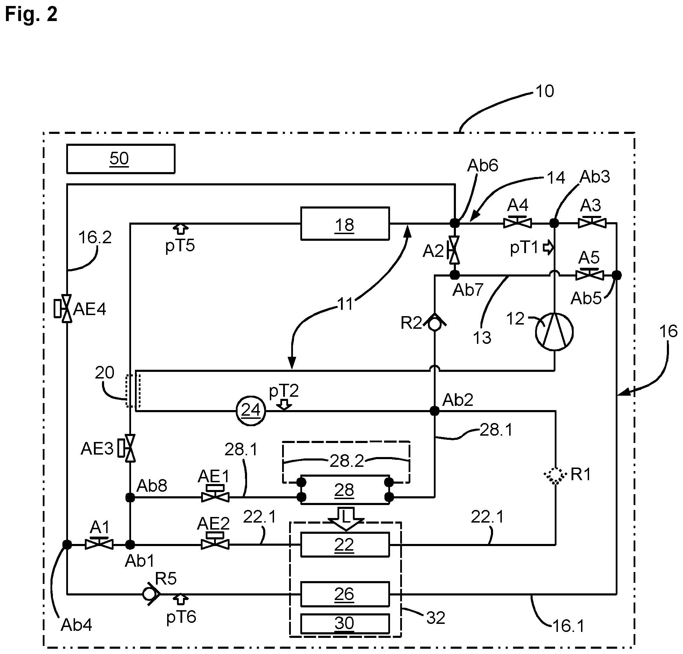

Fig. 2 zeigt eine erfindungsgemäße Anordnung der einzigen niederdruckseitigen Sensoreinrichtung pT2. Dabei ist die Sensoreinrichtung pT2 stromaufwärts von dem Kältemittelsammler 24 angeordnet. Die Sensoreinrichtung pT2 ist unmittelbar vor dem Kältemittelsammler 24 angeordnet. Dabei kann ein Abstand zwischen der Sensoreinrichtung pT2 du dem Kältemittelsammler beispielsweise bis zu 20 Zentimeter betragen.

Die Sensoreinrichtung pT2 ist im Beispiel der Fig. 2 ebenfalls stromabwärts von dem Verdampfer 22 und dem Chiller 28 angeordnet. Insbesondere ist die Sensoreinrichtung pT2 stromabwärts von dem Abzweig Ab2 angeordnet, an dem sich der Verdampferabschnitt 22.1 und der Chillerabschnitt 28.1 treffen. Mit anderen Worten ist die Sensoreinrichtung pT2 zwischen dem Abzweig Ab2 und dem Kältemittelsammler 24 angeordnet.

In beiden Beispiele der Fig.1 und 2 weist die Kälteanlage 10 eine Steuereinrichtung 50 auf, die dazu eingerichtet ist, die verschiedenen Betriebszustände der Kälteanlage 10, die oben beispielhaft beschrieben worden sind, zu erfassen, insbesondere jedoch auf Basis der Eingangswerte und Sollgrößen zu steuern bzw. zu regeln. Dabei kann die Steuereinrichtung 50 insbesondere Sensordaten empfangen und verarbeiten, weitere Betriebsparameter berechnen oder/und abschätzen sowie den Kältemittelverdichter bzw. Ventileinrichtungen und dergleichen der Kälteanlage ansteuern.

Unter der Berücksichtigung des strukturellen Aufbaus mit einer einzigen niederdruckseitigen Sensoreinrichtung pT2 kann die Steuereinrichtung 50 dazu eingerichtet sein, basierend auf erfassten Druck- oder/und Temperaturwerten von der einzigen niederdruckseitigen Sensoreinrichtung pT2, wenigstens eine der folgenden Funktionen auszuführen: Überwachung einer Überhitzung, gleichbedeutend bei Systemen mit niederdruckseitig angeordnetem Kältemittelsammler 24 mit einer Unterfüllung , die ihrerseits entweder temporär oder dauerhaft auftreten kann; und/oder Überwachung des minimalen Saugdrucks zum Vereisungsschutz.

Bei der Überwachung und gegebenenfalls Abregelung der temporären Überhitzungkann insbesondere ein Unterfüllungszustand berücksichtigt werden. Ein solcher Überhitzungs- und damit Unterfüllungszustand kann beispielsweise auftreten bei
Lastwechseln im System hin zu einem höheren Leistungsbedarf;
Niederlast, wenn der Verdampfer alleine im Kühlbetrieb (AC-Betrieb) betrieben wird;
einem Wärmepumpenbetrieb oder
einem Nachheizbetrieb (Reheat) mit Wärmeüberschuss.

Dabei ist bei der Anordnung der einzigen Sensoreinrichtung pT2 stromabwärts von dem Kältemittelsammler 24 (Fig. 1) aufgrund des Übergangs eines stationären in einen zumindest temporär dynamischen (instationären) Betrieb der Kälteanlage 10 im Zusammenhang mit dem aufgetretenen Lastwechsel und der noch nicht vollständig erfolgten Freisetzung von zusätzlich erforderlichem Kältemittel aus dem Kältemittelsammler 24 in den Kreislauf, eine Verzögerung hinsichtlich des Abbaus des Überhitzungszustandes bei regulärem Anlagenbetrieb zu berücksichtigen. Der Bereitstellungsprozess von Kältemittel aus dem Sammler 24 in das aktive System bzw. den Kreislauf 11 selbst läuft dabei zeitlich verzögert ab. Je größer der Lastwechsel desto ausgeprägter bzw. länger die Zeitspanne bis zur Wiederherstellung des regulären, quasi stationären Betriebs, mit einem im Wesentlichen konstanten Kältemittelmassenstrom.

Bei der Kälteanlage 10 mit der einzigen niederdruckseitigen Sensoreinrichtung pT2 stromaufwärts von dem Kältemittelsammler 24 (Fig. 2) kann die Steuereinrichtung 50 weiter dazu eingerichtet sein, basierend auf erfassten Druck- oder/und Temperaturwerten wenigstens eine der folgenden weiteren Funktionen auszuführen:
Regelung des Verdampfers 22 oder/und des weiteren Wärmeübertragers, insbesondere Chillers 28, in einem AC-Dualbetrieb;
Regelung der Überhitzung des Verdampfers 22, wenn mehr Kühlleistung am weiteren Wärmeübertrager, insbesondere Chiller 28, gefordert ist;
Regelung der Überhitzung des weiteren Wärmeübertragers, insbesondere Chillers 28, wenn mehr Kühlleistung am Verdampfer 22 gefordert ist.

Wird die einzige Sensoreinrichtung pT2 stromaufwärts von dem Kältemittelsammler 24 (Fig. 2) angeordnet, können die oben beschriebenen Funktionen in Bezug auf die Überhitzung ohne nennenswerte Verzögerung umgesetzt werden. Entsprechend kann die Überwachung und gegebenenfalls Abregelung temporärer Unterfüllung über den Überhitzungszustand sehr schnell und genau erfolgen. Im Extremfall, was beispielsweise einer dauerhaft auftretenden Überhitzung, welche bspw. mit größer als 5K gemessen wird, und nicht erfolgreichem Reglereingriff zur Behebung dieser Normbetriebsabweichung entspricht, ist die Abschaltung der Kälteanlage 10 die Folge.

Bei der Kälteanlage 10 mit der einzigen niederdruckseitigen Sensoreinrichtung pT2 stromaufwärts von dem Kältemittelsammler 24 (Fig. 2) kann die Steuereinrichtung 50 dazu eingerichtet sein, wenigstens ein gespeichertes Kennfeld zu berücksichtigen, wobei das Kennfeld Werte umfasst für das Bestimmen einer Saugdruckabregelung basierend auf einem von der einzigen Sensoreinrichtung erfassten Druck und auf einem im Kennfeld enthaltenen Druckverlust, der stromabwärts von der einzigen Sensoreinrichtung pT2 bis zum Kältemittelverdichter 12 auftritt.

Weiter kann bei der Kälteanlage 10 die Steuereinrichtung 50 dazu eingerichtet sein, eine Unterfüllung stromabwärts von dem Kältemittelsammler 24 zu erkennen, wobei eine verzögernde Wirkung des Kältemittelsammlers 24 mittels eines Kennfeldes oder/und mittels Funktionen abgeschätzt wird. Dabei ist zu berücksichtigen, dass eine Unterfüllungserkennung mit der stromaufwärts von dem Kältemittelsammler 24 angeordneten Sensoreinrichtung pT2 (Fig. 2) dynamischer und möglicherweise sensibler erfasst wird, so dass die beschriebene Dämpfung bzw. verzögernde Wirkung durch den stromabwärts angeordneten Kältemittelsammler 24 mittels Kennfeld oder/und Funktionen modelliert werden sollte.

Mittels der hier vorgestellten Kälteanlage 10 mit einer einzigen niederdruckseitigen Sensoreinrichtung pT2 kann mindestens ein Druck-Temperatursensor eingespart werden verglichen mit bekannten Konfigurationen von Kälteanlagen für Kraftfahrzeuge, was sich positiv auf Kosten, Packagebedarf und Gewicht einer solchen Kälteanlage auswirkt. Ferner ist es trotz des Einsatzes von einer einzigen niederdruckseitigen Sensoreinrichtung pT2 möglich, alle wesentlichen Funktionen darzustellen bzw. mittels der Steuereinrichtung 50 der Kälteanlage 10 bereitzustellen.

## Patentansprüche

1. Kälteanlage (10) mit Wärmepumpenfunktion für ein Kraftfahrzeug, wobei die Kälteanlage (10) umfasst:
einen Kältemittelverdichter (12), der mit einem Primärstrang (14) verbindbar oder verbunden ist;
einen direkt oder indirekt wirkenden äußeren Wärmeübertrager (18), der im Primärstrang (14) angeordnet ist;
einen ersten Verdampfer (22), der im Primärstrang (14) angeordnet ist;
einen ersten direkt oder indirekt wirkenden Wärmeübertrager, insbesondere Chiller (28), der strömungstechnisch parallel zu dem Verdampfer (22) angeordnet ist; und
einen niederdruckseitig angeordneten Kältemittelsammler (24),
wobei stromabwärts von dem Verdampfer (22) und dem ersten Wärmeübertrager, insbesondere Chiller (28), eine einzige Sensoreinrichtung (pT2) angeordnet ist, die dazu eingerichtet ist, den Druck und die Temperatur des Kältemittels auf der Niederdruckseite der Kälteanlage (10) zu erfassen,
**dadurch gekennzeichnet, dass** die einzige Sensoreinrichtung (pT2) stromaufwärts von dem Kältemittelsammler (24) und unmittelbar vor diesem angeordnet ist.

2. Kälteanlage (10) nach Anspruch 1, **dadurch gekennzeichnet, dass** die einzige Sensoreinrichtung (pT2) stromabwärts von einem Abzweig (Ab2) angeordnet ist, bei dem ein ausgangsseitiger Leitungsabschnitt (22.1) des Verdampfers (22) und ein ausgangsseitiger Leitungsabschnitt (28.1) des weiteren Wärmeübertragers, insbesondere Chillers (28), miteinander verbunden sind.

3. Kälteanlage (10) nach einem der vorhergehenden Ansprüche, **dadurch gekennzeichnet, dass** sie eine Steuereinrichtung (50) aufweist, die dazu eingerichtet ist, basierend auf erfassten Druck- oder/und Temperaturwerten von der einzigen Sensoreinrichtung (pT2) wenigstens eine der folgenden Funktionen auszuführen:
Überwachung einer temporären, insbesondere kurzzeitig oder langzeitig auftretenden, Überhitzung des Kältemittels zur Unterfüllungserkennung;
Überwachung des minimalen Saugdrucks zum Vereisungsschutz.

4. Kälteanlage (10) nach Anspruch 3, **dadurch gekennzeichnet, dass** die Steuereinrichtung (50) dazu eingerichtet ist, basierend auf erfassten Druck- oder/und Temperaturwerten von der einzigen, stromaufwärts von dem Kältemittelsammler (24) angeordneten Sensoreinrichtung (pT2) wenigstens eine der folgenden weiteren Funktionen auszuführen:
Regelung des Verdampfers (22) oder/und des weiteren Wärmeübertragers, insbesondere Chillers (28), in einem AC-Dualbetrieb;
Regelung der Überhitzung des Verdampfers (22), wenn mehr Kühlleistung am weiteren Wärmeübertrager, insbesondere Chiller (28), gefordert ist;
Regelung der Überhitzung des weiteren Wärmeübertragers, insbesondere Chillers (28), wenn mehr Kühlleistung am Verdampfer (22) gefordert ist.

5. Kälteanlage (10) nach Anspruch 3 oder 4 **dadurch gekennzeichnet, dass** die Steuereinrichtung (50) dazu eingerichtet ist, wenigstens eine gespeicherte Kennlinie oder/und wenigstens ein gespeichertes Kennfeld zu berücksichtigen, wobei die Kennlinie bzw. das Kennfeld Werte umfassen für das Bestimmen vorherrschender Drucklagen, insbesondere einer Saugdruckabregelung, basierend auf einem von der einzigen Sensoreinrichtung erfassten Druck und einem in der Kennlinie bzw. im Kennfeld enthaltenen Druckverlust, der stromabwärts von der einzigen Sensoreinrichtung (pT2) bis zum Kältemittelverdichter (12) auftritt.

6. Kälteanlage (10) nach Anspruch 5, **dadurch gekennzeichnet, dass** die Steuereinrichtung (50) weiter dazu eingerichtet ist, eine Unterfüllung stromabwärts von dem Kältemittelsammler (24) zu erkennen, wobei eine verzögernde Wirkung des Kältemittelsammlers (24) mittels eines Kennfeldes oder/und mittels Funktionen abgeschätzt oder ermittelt wird.

7. Kälteanlage (10) nach einem der vorhergehenden Ansprüche, **dadurch gekennzeichnet, dass** sie weiter umfasst:
einen Sekundärstrang (16), der mit dem Kältemittelverdichter (12) verbunden oder verbindbar ist; und
einen weiteren, eine Wärmequelle darstellenden, direkt oder indirekt wirkenden Wärmeübertrager, insbesondere ein Heizregister (26), der im Sekundärstrang (16) angeordnet ist.

8. Kälteanlage (10) nach Anspruch 7, **dadurch gekennzeichnet, dass** sie weiter umfasst:
ein zwischen dem Kältemittelverdichter (12) und dem äußeren Wärmeübertrager (18) angeordnetes Primärstrangventil (A4);
ein zwischen dem Kältemittelverdichter (12) und dem weiteren, eine Wärmequelle darstellenden Wärmeübertrager, insbesondere Heizregister (26), angeordnetes Sekundärstrangventil (A3).

9. Kraftfahrzeug, insbesondere zumindest teilweise elektrisch angetriebenes Kraftfahrzeug, mit einer Kälteanlage (10) gemäß einem der vorhergehenden Ansprüche.

## Claims

1. Refrigeration system (10) with a heat pump function for a motor vehicle, wherein the refrigeration system (10) comprises:
a refrigerant compressor (12), which is connectable or connected to a primary line (14);
a directly or indirectly acting external heat exchanger (18), which is arranged in the primary line (14);
a first evaporator (22), which is arranged in the primary line (14); a first directly or indirectly acting heat exchanger, in particular a chiller (28), which is arranged fluidically parallel to the evaporator (22); and
a refrigerant collector (24) arranged on the low-pressure side,
wherein a single sensor apparatus (pT2) is arranged downstream of the evaporator (22) and the first heat exchanger, in particular the chiller (28), which sensor apparatus is configured to detect the pressure and the temperature of the refrigerant on the low-pressure side of the refrigeration system (10),
**characterized in that** the single sensor apparatus (pT2) is arranged upstream of the refrigerant collector (24) and directly in front of it.

2. Refrigeration system (10) according to claim 1, **characterized in that** the single sensor apparatus (pT2) is arranged downstream of a branch (Ab2), in which an outlet-side line section (22.1) of the evaporator (22) and an outlet-side line section (28.1) of the further heat exchanger, in particular the chiller (28), are connected to one another.

3. Refrigeration system (10) according to any one of the preceding claims, **characterized in that** it has a control apparatus (50) which is configured to carry out at least one of the following functions based on detected pressure and/or temperature values from the single sensor apparatus (pT2):
monitoring temporary, in particular short-term or long-term, overheating of the refrigerant for recognizing underfilling; monitoring the minimum suction pressure for anti-icing protection.

4. Refrigeration system (10) according to claim 3, **characterized in that** the control apparatus (50) is configured to carry out at least one of the following further functions based on detected pressure and/or temperature values from the single sensor apparatus (pT2) arranged upstream of the refrigerant collector (24):
regulating the evaporator (22) and/or the additional heat exchanger, in particular a chiller (28), in an AC dual operation;
regulating the overheating of the evaporator (22) if more cooling power is required at the additional heat exchanger, in particular the chiller (28);
regulating the overheating of the additional heat exchanger, in particular the chiller (28), if more cooling power is required at the evaporator (22).

5. Refrigeration system (10) according to claim 3 or 4, **characterized in that** the control apparatus (50) is configured to take into consideration at least one stored characteristic curve and/or at least one stored characteristic diagram, wherein the characteristic curve or the characteristic diagram comprises values for determining current pressure levels, in particular a suction pressure control, based on a pressure detected by the single sensor apparatus and a pressure loss contained in the characteristic curve or in the characteristic diagram, which occurs downstream of the single sensor apparatus (pT2) to the refrigerant compressor (12).

6. Refrigeration system (10) according to claim 5, **characterized in that** the control apparatus (50) is further configured to recognize underfilling downstream of the refrigerant collector (24), wherein a delaying effect of the refrigerant collector (24) is estimated or determined by means of a characteristic diagram and/or by means of functions.

7. Refrigeration system (10) according to any one of the preceding claims, **characterized in that** it further comprises:
a secondary line (16), which is connectable or connected to the refrigerant compressor (12); and
a further directly or indirectly acting heat exchanger, representing a heat source, in particular a heating register (26), which is arranged in the secondary line (16).

8. Refrigeration system (10) according to claim 7, **characterized in that** it further comprises:
a primary line valve (A4) arranged between the refrigerant compressor (12) and the external heat exchanger (18);
a secondary line valve (A3) arranged between the refrigerant compressor (12) and the further heat exchanger, in particular a heating register (26), representing a heat source.

9. Motor vehicle, in particular at least partially electrically powered motor vehicle, with a refrigeration system (10) according to any one of the preceding claims.

## Revendications

1. Installation de réfrigération (10) avec fonction de pompe à chaleur pour un véhicule automobile, dans laquelle l'installation de réfrigération (10) comprend :
un compresseur de réfrigérant (12) qui peut être connecté ou est connecté à une branche primaire (14) ;
un échangeur de chaleur extérieur (18) agissant directement ou indirectement, qui est disposé dans la branche primaire (14) ;
un premier évaporateur (22) qui est disposé dans la branche primaire (14) ; un premier échangeur de chaleur agissant directement ou indirectement, en particulier un refroidisseur (28), qui est disposé fluidiquement en parallèle par rapport à l'évaporateur (22) ; et
un collecteur de réfrigérant (24) disposé côté basse pression,
dans laquelle un seul appareil de capteur (pT2) est disposé en aval de l'évaporateur (22) et du premier échangeur de chaleur, en particulier du refroidisseur (28), appareil qui est configuré pour détecter la pression et la température du réfrigérant côté basse pression de l'installation de réfrigération (10),
**caractérisée en ce que** l'appareil de capteur unique (pT2) est disposé en amont du collecteur de réfrigérant (24) et directement en amont de celui-ci.

2. Installation de réfrigération (10) selon la revendication 1, **caractérisée en ce que** l'appareil de capteur unique (pT2) est disposé en aval d'une dérivation (Ab2) au niveau de laquelle une section de conduit (22.1) côté sortie de l'évaporateur (22) et une section de conduit (28.1) côté sortie de l'échangeur de chaleur supplémentaire, en particulier du refroidisseur (28), sont reliés entre eux.

3. Installation de réfrigération (10) selon l'une quelconque des revendications précédentes, **caractérisée en ce qu'**elle présente un appareil de commande (50) qui est configuré pour mettre en œuvre au moins l'une des fonctions suivantes sur la base de valeurs de pression et/ou de température saisies par l'appareil de capteur unique (pT2) :
surveillance d'une surchauffe temporaire, en particulier de courte ou de longue durée, du réfrigérant pour la détection de sous-remplissage ; surveillance de la pression d'aspiration minimale pour la protection contre le givrage.

4. Installation de réfrigération (10) selon la revendication 3, **caractérisée en ce que** l'appareil de commande (50) est configuré pour mettre en œuvre au moins l'une des fonctions supplémentaires suivantes sur la base de valeurs de pression et/ou de température saisies par l'appareil de capteur unique (pT2) disposé en amont du collecteur de réfrigérant (24) :
régulation de l'évaporateur (22) et/ou de l'échangeur de chaleur supplémentaire, en particulier du refroidisseur (28), dans un fonctionnement double CA ;
régulation de la surchauffe de l'évaporateur (22) lorsque davantage de puissance de refroidissement est requise au niveau de l'échangeur de chaleur supplémentaire, en particulier le refroidisseur (28) ;
régulation de la surchauffe de l'échangeur de chaleur supplémentaire, en particulier du refroidisseur (28), lorsque davantage de puissance de refroidissement est requise au niveau de l'évaporateur (22).

5. Installation de réfrigération (10) selon la revendication 3 ou 4, **caractérisée en ce que** l'appareil de commande (50) est configuré pour tenir compte d'au moins une courbe caractéristique enregistrée et/ou d'au moins un diagramme caractéristique enregistré, dans laquelle la courbe caractéristique ou le diagramme caractéristique comprennent des valeurs pour déterminer des pressions prédominantes, en particulier une régulation de la pression d'aspiration, sur la base d'une pression saisie par l'appareil de capteur unique et d'une perte de pression contenue dans la courbe caractéristique ou le diagramme caractéristique qui se produit en aval de l'appareil de capteur unique (pT2) jusqu'au compresseur de réfrigérant (12).

6. Installation de réfrigération (10) selon la revendication 5, **caractérisée en ce que** l'appareil de commande (50) est en outre configuré pour détecter un sous-remplissage en aval du collecteur de réfrigérant (24), dans laquelle un effet retardateur du collecteur de réfrigérant (24) est estimé ou déterminé au moyen d'un diagramme caractéristique et/ou au moyen de fonctions.

7. Installation de réfrigération (10) selon l'une quelconque des revendications précédentes, **caractérisée en ce qu'**elle comprend en outre :
une branche secondaire (16) connectée ou pouvant être connectée au compresseur de réfrigérant (12) ; et
un échangeur de chaleur supplémentaire représentant une source de chaleur agissant directement ou indirectement, en particulier un registre de chauffage (26) qui est disposé dans la branche secondaire (16).

8. Installation de réfrigération (10) selon la revendication 7, **caractérisée en ce qu'**elle comprend en outre :
une vanne de branche primaire (A4) disposée entre le compresseur de réfrigérant (12) et l'échangeur de chaleur extérieur (18) ;
une vanne de branche secondaire (A3) disposée entre le compresseur de réfrigérant (12) et l'échangeur de chaleur supplémentaire représentant une source de chaleur, en particulier le registre de chauffage (26).

9. Véhicule automobile, en particulier véhicule automobile au moins partiellement à propulsion électrique, avec une installation de réfrigération (10) selon l'une quelconque des revendications précédentes.
